# EUROPEAN PATENT SPECIFICATION

(11) **EP 3 913 728 B1**
(45) Date of publication and mention of the grant of the patent: **20.03.2024**
(21) Application number: 19922631.7
(22) Date of filing: 20.12.2019
(51) Int. Cl.: H01M 10/613, H01M 10/615, H01M 10/625, H01M 10/635, H01M 10/6554, H01M 10/6568, H01M 10/658

(54) **THERMAL MANAGEMENT DEVICE, THERMAL MANAGEMENT SYSTEM AND NEW ENERGY VEHICLE**
THERMISCHE VERWALTUNGSVORRICHTUNG, THERMISCHES VERWALTUNGSSYSTEM UND NEUE-ENERGIE-FAHRZEUG
DISPOSITIF DE GESTION THERMIQUE, SYSTÈME DE GESTION THERMIQUE, ET VÉHICULE À ÉNERGIES NOUVELLES

(30) Priority: 29.03.2019 CN 201910251078
(43) Date of publication of application: 24.11.2021
(73) Proprietor: Huawei Digital Power Technologies Co., Ltd., Shenzhen, Guangdong 518043 (CN)
(72) Inventor: HE, Huan, Shenzhen, Guangdong 518129 (CN)
(74) Representative: Körber, Martin Hans
(86) International application number: PCT/CN2019/127218
(87) International publication number: WO 2020/199669

(56) References cited:
- DE-A1-102016 015 007
- US-A1- 2013 118 707
- US-A1- 2013 328 392

## Description

### TECHNICAL FIELD

This application relates to the field of new energy technologies, and in particular, to a thermal management apparatus, a thermal management system, and a new energy vehicle.

### BACKGROUND

With development in the new energy field, power batteries are used more frequently, and requirements for safety performance of the power batteries are also increasing. Temperature is one of the important factors affecting safety of the power batteries.

When a power battery is in use, the temperature has a dual effect on the power battery. On the one hand, with an increase in the temperature, electrolyte activity increases, and internal resistance of the battery decreases, so that performance of the power battery can be improved. However, a comparatively high temperature may lead to harmful reactions such as electrode degradation and decomposition, affecting lifespan of the battery. Therefore, it is necessary to dissipate heat from the power battery in a case of a comparatively high temperature. On the other hand, use of the power battery at a low temperature not only reduces charging and discharging capacities and the lifespan of the battery, but also causes a hazard in an extreme case. Therefore, when the power battery is at an extremely low ambient temperature for a long time, thermal insulation measures are required. It can be learned that when thermal management is performed on the power battery, both heat dissipation and thermal insulation need to be considered.

In conclusion, a heat management solution is urgently needed, to meet both a heat dissipation requirement and a thermal insulation requirement of an electronic device (for example, a battery module).

US 2013/328392 A1 discloses a battery for an electric motor of a motor vehicle.

US 2013/118707 A1 discloses an arrangement for maintaining a desired operating temperature of a battery in a vehicle.

DE102016015007A1 discloses a cooling system, in particular a high-voltage battery cooling system for a motor vehicle.

### SUMMARY

Embodiments of this application provide a thermal management apparatus, a thermal management system, and a new energy vehicle, to perform thermal management on an electronic device and meet both a heat dissipation requirement and a thermal insulation requirement of the electronic device. The invention is set out in the appended set of claims.

According to a first aspect, an embodiment of this application provides a thermal management apparatus, configured to perform thermal management on an electronic device. The thermal management apparatus includes a first loop in which a first solenoid valve, a first liquid cooling plate, a second solenoid valve, and a second liquid cooling plate are sequentially connected in series, and a thermal insulation structure. The second liquid cooling plate, the thermal insulation structure, and the first liquid cooling plate are sequentially stacked. The first liquid cooling plate can perform heat transfer with the electronic device. When the first solenoid valve and the second solenoid valve are turned on, the first liquid cooling plate communicates with the second liquid cooling plate. When the first solenoid valve and the second solenoid valve are turned off, the first liquid cooling plate and the second liquid cooling plate are disconnected.

The thermal insulation structure may be thermal insulation foam, and a material of the thermal insulation foam may be silica aerogel.

In the thermal management apparatus provided in the first aspect, the first solenoid valve and the second solenoid valve are both turned on or they are both turned off. When the first solenoid valve and the second solenoid valve are turned on, the first liquid cooling plate communicates with the second liquid cooling plate, heat from the electronic device may be conducted to the first liquid cooling plate, and further conducted to the second liquid cooling plate through the first loop, and the heat is carried away on the second liquid cooling plate by external airflow, thereby implementing heat dissipation of the electronic device. When the first solenoid valve and the second solenoid valve are turned off, the first liquid cooling plate and the second liquid cooling plate are disconnected, and the thermal insulation structure may perform a function of isolating the external airflow, thereby implementing thermal insulation of the electronic device. Therefore, by using the thermal management apparatus provided in the first aspect, both a heat dissipation requirement and a thermal insulation requirement of the electronic device can be met.

In specific implementation, the first liquid cooling plate and the second liquid cooling plate may be disposed in parallel.

In the foregoing solution, the thermal insulation structure is disposed between the two liquid cooling plates that are in parallel. When the first solenoid valve and the second solenoid valve are turned off, the thermal insulation structure can more effectively disconnect the first liquid cooling plate from the second liquid cooling plate, thereby achieving a better thermal insulation effect.

In addition, the thermal management apparatus provided in the first aspect may further include a first circulation pump connected in series in the first loop, and the first circulation pump is configured to drive coolant to circulate in the first loop.

In the foregoing solution, the first circulation pump can circulate the static coolant in the first loop, thereby enhancing a heat dissipation capability of the first loop.

In a possible design, the thermal management apparatus further includes a second loop, and the second loop includes the first liquid cooling plate, a second circulation pump, and a third solenoid valve that are connected in series. The second circulation pump is configured to drive the coolant to circulate in the second loop. The third solenoid valve is configured to implement communication or disconnection of the second loop.

In the foregoing solution, communication or disconnection of the second loop can be implemented by using the third solenoid valve. When the second loop communicates, heat from the electronic device is conducted to the first liquid cooling plate, and further conducted to the outside or conducted to another device (for example, a heat exchanger connected to a cooling system) through the second loop, thereby implementing heat dissipation of the electronic device. Further, the first loop may also be in a communicating state in this case, and heat dissipation is further performed on the electronic device through the first loop and the second loop, thereby enhancing a heat dissipation capability of the thermal management apparatus. When both the first loop and the second loop are disconnected, the first liquid cooling plate and the second liquid cooling plate are disconnected, and the thermal insulation structure can isolate the electronic device from the external airflow, thereby performing a thermal insulation function for the electronic device.

In a possible design, the thermal management apparatus further includes a heat exchanger connected in series in the second loop, and the heat exchanger is configured to exchange heat with a cooling system.

In the foregoing solution, heat from the electronic device is first transferred to the first liquid cooling plate, and the first liquid cooling plate transfers the heat to the heat exchanger by using the coolant in the second loop. A heat dissipation effect of the thermal management apparatus can be enhanced by using the cooling system connected to the heat exchanger.

In actual application, there may be a plurality of types of electronic devices. In a specific example, the electronic device may be a battery module, and a thermally conductive adhesive may be filled between the battery module and the first liquid cooling plate.

According to a second aspect, an embodiment of this application provides a thermal management system. The thermal management system includes a controller and the thermal management apparatus provided in any one of the first aspect and the possible designs of the first aspect, where an electronic device may be a battery module.

Specifically, the controller is configured to: detect a temperature of the battery module; and when detecting that the temperature of the battery module is lower than a first preset temperature, control a first solenoid valve and a second solenoid valve to be turned on and control a first circulation pump to be turned off; and control a third solenoid valve to be turned off and control a second circulation pump to be turned off.

In the foregoing solution, heat dissipation may be performed on the battery module when the battery module does not have a high heat dissipation requirement. Static coolant in a first loop can transfer heat from the battery module to a battery pack bottom plate, and heat dissipation is performed on the battery module by using external airflow.

In a possible design, the controller is further configured to: when detecting that the temperature of the battery module is higher than the first preset temperature and lower than a second preset temperature, control the first solenoid valve and the second solenoid valve to be turned on and control the first circulation pump to be turned on; and control the third solenoid valve to be turned off and control the second circulation pump to be turned off.

In the foregoing solution, the circulating coolant in the first loop can transfer heat from the battery module to the battery pack bottom plate, and heat dissipation is performed on the battery module by using the external airflow.

In a possible design, the controller is further configured to: when detecting that the temperature of the battery module is higher than the second preset temperature and lower than a third preset temperature, control the first solenoid valve and the second solenoid valve to be turned on and control the first circulation pump to be turned off; and control the third solenoid valve to be turned on and control the second circulation pump to be turned on.

In the foregoing solution, driven by the second circulation pump, the coolant in the first loop and the second loop circulates. One part of heat from the battery module is transferred to a cooling system by using the circulating coolant in the second loop, and the other part of the heat from the battery module is transferred to the battery pack bottom plate by using the circulating coolant in the first loop and then carried away by the external airflow. Both the first loop and the second loop perform a heat dissipation function.

In a possible design, the controller is further configured to: when detecting that the temperature of the battery module is higher than a third preset temperature, control the first solenoid valve and the second solenoid valve to be turned on and control the first circulation pump to be turned on; and control the third solenoid valve to be turned on and control the second circulation pump to be turned on.

In the foregoing solution, driven by the first circulation pump and the second circulation pump, the coolant in the first loop and the second loop circulates. One part of heat from the battery module is transferred to a cooling system by using the circulating coolant in the second loop, and the other part of the heat from the battery module is transferred to the battery pack bottom plate by using the circulating coolant in the first loop and then carried away by the external airflow. Both the first loop and the second loop perform a heat dissipation function.

In a possible design, the controller is further configured to: control the first solenoid valve, the second solenoid valve, and the third solenoid valve to be turned on, and control the first circulation pump and the second circulation pump to be turned on.

In the foregoing solution, when the battery module has a comparatively strong heat dissipation requirement, the first solenoid valve, the second solenoid valve, and the third solenoid valve are controlled to be turned on, the first circulation pump and the second circulation pump are controlled to be turned on, and heat dissipation is performed on the battery module by using both the cooling system and the external airflow.

In a possible design, the controller is further configured to: control the first solenoid valve and the second solenoid valve to be turned off and control the first circulation pump to be turned off; and control the third solenoid valve to be turned off and control the second circulation pump to be turned off.

In the foregoing solution, when the battery module has a thermal insulation requirement, the first liquid cooling plate and the second liquid cooling plate may be disconnected. A thermal insulation structure filled between the first liquid cooling plate and the second liquid cooling plate can isolate the battery module from the outside, thereby performing a thermal insulation function. Thermal insulation is performed on the battery module by using the thermal insulation structure.

According to a third aspect, an embodiment of this application provides a new energy vehicle, including a motor, a battery module, and the thermal management apparatus provided in any one of the first aspect and the possible designs of the first aspect. The battery module is configured to provide power for the motor, and the thermal management apparatus is configured to perform thermal management on the battery module.

### BRIEF DESCRIPTION OF DRAWINGS

FIG. 1 is a schematic structural diagram of a thermal management apparatus according to the prior art;
FIG. 2 is a schematic structural diagram of a first thermal management apparatus according to an embodiment of this application;
FIG. 3 is a schematic structural diagram of a second thermal management apparatus according to an embodiment of this application;
FIG. 4 is a schematic structural diagram of a third thermal management apparatus according to an embodiment of this application;
FIG. 5 is a schematic structural diagram of a thermal management system according to an embodiment of this application; and
FIG. 6 is a schematic structural diagram of a new energy vehicle according to an embodiment of this application.

### DESCRIPTION OF EMBODIMENTS

As described in the background, in an actual application scenario, when thermal management is performed on an electronic device such as a power battery, both functions of heat dissipation and thermal insulation need to be considered.

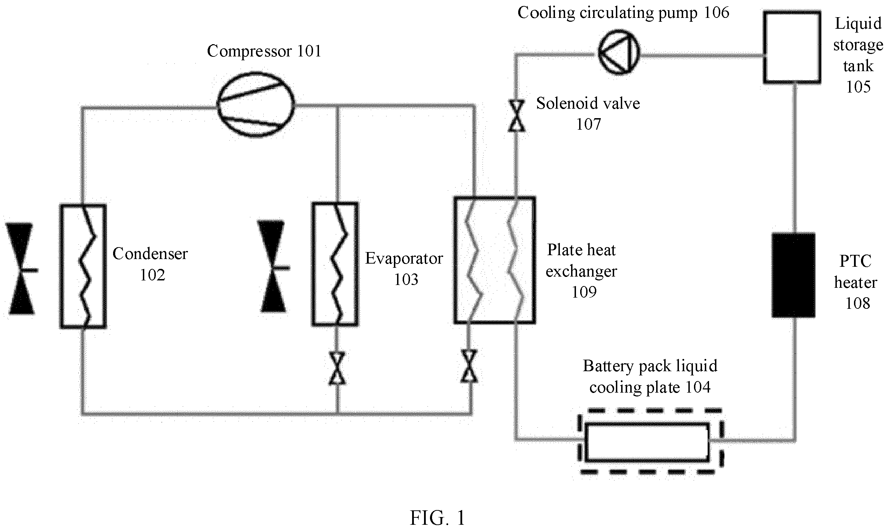

A power battery is used as an example. In the prior art, a battery pack thermal management apparatus shown in FIG. 1 is used to perform thermal management on the power battery.

As shown in FIG. 1, the thermal management apparatus includes an air conditioning refrigeration loop and a heat dissipation and heating loop. The air conditioning refrigeration loop includes a compressor 101, a condenser 102, an evaporator 103, and a circulation pipeline that connects the compressor 101, the condenser 102, and the evaporator 103. The pipeline is filled with refrigerant, and the refrigerant is driven by a corresponding circulation pump. The heat dissipation and heating loop includes a battery pack liquid cooling plate 104, a liquid storage tank 105, a cooling circulation pump 106, a solenoid valve 107, a positive temperature coefficient (PTC) heater 108, and a pipeline that connects the battery pack liquid cooling plate 104, the liquid storage tank 105, the cooling circulation pump 106, the solenoid valve 107, and the positive temperature coefficient heater 108. In this loop, the battery pack liquid cooling plate 104 and the pipeline are filled with coolant (to prevent the coolant from freezing at a low temperature, usually, 50% of a volume of the coolant is glycol and 50% of the volume of the coolant is water), the cooling circulation pump 106 is configured to drive the coolant, and the solenoid valve 107 is configured to control communication or disconnection of the loop. Heat is exchanged between the air conditioning refrigeration loop and the heat dissipation and heating loop by using a plate heat exchanger 109. For example, when heat dissipation needs to be performed on a battery module, heat in the heat dissipation and heating loop may be transferred to the air conditioning refrigeration loop by using the plate heat exchanger 109, thereby meeting a heat dissipation requirement.

A thermally conductive adhesive is applied to an upper surface of the battery pack liquid cooling plate 104, and a thickness of the thermally conductive adhesive is usually 1.0 mm to 1.2 mm. A battery module is disposed on an upper surface of the thermally conductive adhesive. The battery module presses the thermally conductive adhesive firmly by using a fixing force between the battery module and a battery pack frame, to reduce thermal conduction resistance. Thermal insulation foam is disposed between a lower surface of the battery pack liquid cooling plate 104 and an upper surface of a battery pack bottom plate. To improve a thermal insulation effect, silica aerogel may be selected as a material of the thermal insulation foam, and a thickness of the thermal insulation foam is usually about 10 mm, so that thermal insulation on the battery module is implemented at a low temperature.

When heat dissipation needs to be performed on the battery module, heat from the battery module is first transferred to the battery pack liquid cooling plate 104, the battery pack liquid cooling plate 104 transfers the heat to the circulating coolant, the circulating coolant transfers the heat to the plate heat exchanger 109, and the plate heat exchanger 109 transfers the heat to an air conditioning cooling system, thereby implementing heat dissipation of the battery module.

When the battery module needs to be heated, a vehicle controller sends a request to start PTC heating. The PTC heater 108 heats the circulating coolant, the circulating coolant transfers heat to the battery pack liquid cooling plate 104, and the battery pack liquid cooling plate 104 finally transfers the heat to the battery module, thereby implementing heating of the battery module.

When thermal insulation needs to be performed on the battery module, the thermal insulation foam at the bottom of the battery pack liquid cooling plate cuts off a heat transfer path from the battery module to the battery pack frame. Therefore, heat from the battery module is difficult to be transferred out, and the heat is difficult to be absorbed by the battery pack frame or a vehicle chassis, or carried away by air convection, thereby meeting a thermal insulation requirement.

However, the thermal management apparatus shown in FIG. 1 has the following problem: Because the thermal insulation foam is always disposed between the lower surface of the battery pack liquid cooling plate 104 and the upper surface of the battery pack bottom plate, a thermal insulation function of the battery module cannot be disabled at any time, and the thermal insulation foam affects heat dissipation efficiency of the battery module in any working condition. Particularly, in high-power charging and discharging scenarios, because a heat conduction path between the battery module and the battery pack frame is cut off by the thermal insulation foam, heat dissipation performance of the battery module is severely affected, and even a heat dissipation objective cannot be achieved. In addition, regardless of a temperature of the battery module, only one heat dissipation loop can be used for heat dissipation whenever heat dissipation is required, resulting in comparatively high energy consumption.

Embodiments of this application provide a thermal management apparatus, a thermal management system, and a new energy vehicle, to perform thermal management on an electronic device and meet both a heat dissipation requirement and a thermal insulation requirement of the electronic device.

It should be noted that "a plurality of' in this application refers to two or more than two. In addition, it should be understood that words such as "first" and "second" in the descriptions of this application are only used for the purpose of distinguishing descriptions, and should not be understood as an indication or implication of relative importance, or an indication or implication of a sequence.

To make the objectives, technical solutions, and advantages of this application clearer, the following further describes this application in detail with reference to the accompanying drawings.

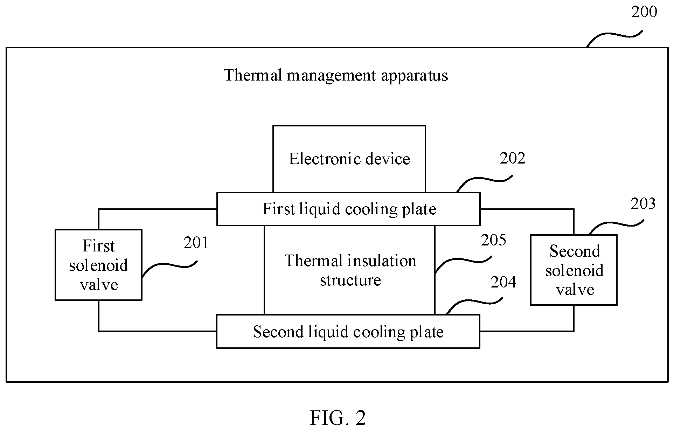

FIG. 2 is a schematic structural diagram of a thermal management apparatus according to an embodiment of this application.

The thermal management apparatus 200 is configured to perform thermal management on an electronic device. The thermal management apparatus 200 includes a first loop in which a first solenoid valve 201, a first liquid cooling plate 202, a second solenoid valve 203, and a second liquid cooling plate 204 are sequentially connected in series, and a thermal insulation structure 205. The second liquid cooling plate 204, the thermal insulation structure 205, and the first liquid cooling plate 202 are sequentially stacked. The first liquid cooling plate 202 can perform heat transfer with the electronic device. When the first solenoid valve 201 and the second solenoid valve 203 are turned on, the first liquid cooling plate 202 communicates with the second liquid cooling plate 204. When the first solenoid valve 201 and the second solenoid valve 203 are turned off, the first liquid cooling plate 202 and the second liquid cooling plate 204 are disconnected.

The first liquid cooling plate 202 and the second liquid cooling plate 204 may be disposed in parallel.

In the foregoing solution, the thermal insulation structure 205 is disposed between the two liquid cooling plates that are in parallel. When the first solenoid valve 201 and the second solenoid valve 203 are turned off, the thermal insulation structure 205 can more effectively disconnect the first liquid cooling plate 202 from the second liquid cooling plate 204, thereby achieving a better thermal insulation effect.

In the thermal management apparatus 200, the electronic device may be a battery module, and the battery module is a chargeable and dischargeable power supply unit in which a plurality of batteries are connected in a specific serial and parallel manner and then fastened together by some mechanical parts. A thermally conductive adhesive may be filled between the battery module and the first liquid cooling plate 202. The thermally conductive adhesive may enable heat to be transferred between the battery module and the first liquid cooling plate 202. For example, a thickness of the thermally conductive adhesive may be 1.0 mm to 1.2 mm.

In the thermal management apparatus 200, the thermal insulation structure 205 may be thermal insulation foam, and a material of the thermal insulation foam may be silica aerogel. For example, silica aerogel with a thickness of about 10 mm may be selected as the thermal insulation material. In addition, a mixture of glycol and water may be selected for coolant on the liquid cooling plates and in a pipeline of the first loop, where glycol accounts for 50% of a volume of the coolant, and water accounts for 50% of the volume of the coolant. Certainly, selection of the thermal insulation structure 205 and the coolant is not limited to the foregoing examples, provided that the thermal insulation structure 205 can achieve a thermal insulation effect, and the coolant can achieve a cooling effect.

Further, the thermal management apparatus 200 may further include a first circulation pump connected in series in the first loop, and the first circulation pump is configured to drive the coolant to circulate in the first loop.

In this implementation, heat dissipation to different degrees may be implemented through the first loop: When the first solenoid valve 201 and the second solenoid valve 203 are turned on, and the first circulation pump is turned off, the static coolant in the first loop may carry away heat from the electronic device, thereby performing a heat dissipation function. When the first solenoid valve 201 and the second solenoid valve 203 are turned on, and the first circulation pump is turned on, the circulating coolant in the first loop may carry away heat from the electronic device, thereby performing a heat dissipation function. The circulating coolant has a heat conduction capability stronger than that of the static coolant, and therefore has a better heat dissipation effect.

In the thermal management apparatus 200, the first solenoid valve 201 and the second solenoid valve 203 are always both turned on or they are always both turned off. When the first solenoid valve 201 and the second solenoid valve 203 are turned on, the first liquid cooling plate 202 communicates with the second liquid cooling plate 204, heat from the electronic device may be conducted to the first liquid cooling plate 202, and further conducted to the second liquid cooling plate 204 through the first loop, and the heat is carried away on the second liquid cooling plate 204 by external airflow, thereby performing a heat dissipation function for the electronic device. Further, if the first loop further includes the first circulation pump, the coolant may be driven to circulate in the first loop by using the first circulation pump, achieving a better heat dissipation effect. When the first solenoid valve 201 and the second solenoid valve 203 are turned off, the first liquid cooling plate 202 and the second liquid cooling plate 204 are disconnected, and the thermal insulation structure 205 may perform a function of isolating the external airflow, thereby implementing thermal insulation of the electronic device.

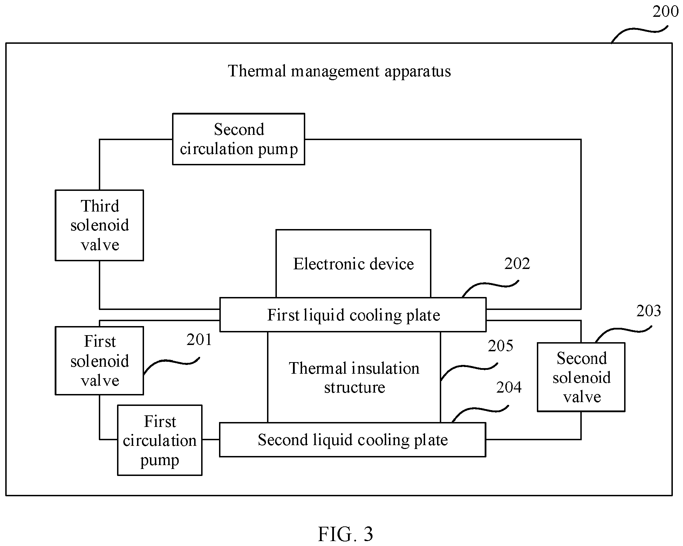

The thermal management apparatus 200 shown in FIG. 2 may further include a second loop, and the second loop includes the first liquid cooling plate 202, a second circulation pump, and a third solenoid valve that are connected in series. The second circulation pump is configured to drive the coolant to circulate in the second loop. The third solenoid valve is configured to implement communication or disconnection of the second loop. In this case, a schematic structural diagram of the thermal management apparatus 200 may be shown in FIG. 3.

In the foregoing implementation, communication or disconnection of the second loop can be implemented by using the third solenoid valve. When the second loop communicates, heat from the electronic device is conducted to the first liquid cooling plate 202, and further conducted to the outside or conducted to another device (for example, a heat exchanger connected to a cooling system) through the second loop, thereby implementing heat dissipation of the electronic device. Further, the first loop may also be in a communicating state in this case, and heat dissipation is further performed on the electronic device through the first loop and the second loop, thereby enhancing a heat dissipation capability of the thermal management apparatus 200. When both the first loop and the second loop are disconnected, the first liquid cooling plate 202 and the second liquid cooling plate 204 are disconnected, and the thermal insulation structure 205 may isolate the electronic device from the external airflow, thereby performing a thermal insulation function for the electronic device.

It is not difficult to understand that when the third solenoid valve is turned on, and the second circulation pump is turned off, the static coolant in the second loop may carry away heat from the electronic device, thereby performing a heat dissipation function. When the third solenoid valve is turned on and the second circulation pump is turned on, the circulating coolant in the second loop may carry away heat from the electronic device, thereby performing a heat dissipation function. The circulating coolant has a heat conduction capability stronger than that of the static coolant, and therefore has a better heat dissipation effect.

In addition, the second loop may further include a heat exchanger, and the heat exchanger is configured to exchange heat with a cooling system, thereby performing heat dissipation on the electronic device. In this case, heat from the electronic device is first transferred to the first liquid cooling plate 202, and the first liquid cooling plate 202 transfers the heat to the heat exchanger by using the coolant in the second loop. A heat dissipation effect of the thermal management apparatus 200 is enhanced by using a function of the cooling system connected to the heat exchanger.

In addition, the thermal management apparatus 200 may further include a heater connected in series in the second loop, and the heater may be configured to heat the electronic device.

In this embodiment of this application, thermal insulation may be performed on the electronic device by using the thermal insulation structure 205, to avoid a negative impact of a low temperature on service life and performance of the electronic device. However, when the electronic device is at a particularly low ambient temperature, a function of the thermal insulation structure 205 is limited. In this case, the electronic device may be heated by using the heater connected in series in the second loop, thereby reducing an impact of the low temperature on the electronic device. For example, when the battery module is in an extremely cold environment, a low temperature may reduce charging and discharging capacities of the battery module, affect lifespan of the battery module, and even cause a hazard. In this case, the heater may be used to heat the battery module, to avoid the foregoing situation.

When the electronic device is heated by using the heater, heating duration may be determined based on a temperature of the electronic device and an ambient temperature. For example, in a case of a same ambient temperature, a lower temperature of the electronic device requires longer heating duration.

It should be noted that a serial connection sequence of devices such as the first liquid cooling plate 202, the second circulation pump, the third solenoid valve, the heat exchanger, and the heater that are connected in series in the second loop is not specifically limited in this embodiment of this application.

In conclusion, in the thermal management apparatus 200 provided in this embodiment of this application, the first solenoid valve 201 and the second solenoid valve 203 are both turned on or they are both turned off. When the first solenoid valve 201 and the second solenoid valve 203 are turned on, the first liquid cooling plate 202 communicates with the second liquid cooling plate 204, heat from the electronic device may be conducted to the first liquid cooling plate 202, and further conducted to the second liquid cooling plate 204 through the first loop, and the heat is carried away on the second liquid cooling plate 204 by the external airflow, thereby implementing heat dissipation of the electronic device. When the first solenoid valve 201 and the second solenoid valve 203 are turned off, the first liquid cooling plate 202 and the second liquid cooling plate 204 are disconnected, and the thermal insulation structure 205 may perform a function of isolating the external airflow, thereby implementing thermal insulation of the electronic device. Therefore, by using the thermal management apparatus 200 provided in this embodiment of this application, both a heat dissipation requirement and a thermal insulation requirement of the electronic device can be met.

Further, when the thermal management apparatus 200 includes the second loop, communication or disconnection of the second loop can be implemented by using the third solenoid valve, to implement heat dissipation or thermal insulation of the electronic device. Through cooperation between the first loop and the second loop, when heat dissipation needs to be performed on the electronic device, one or two of the first loop and the second loop may be selected to dissipate heat from the electronic device to different degrees, and the first loop may enhance heat dissipation performance. When thermal insulation needs to be performed on the electronic device, the first liquid cooling plate 202 and the second liquid cooling plate 204 are disconnected, and the thermal insulation structure 205 may perform a function of isolating the external airflow, thereby implementing thermal insulation of the electronic device.

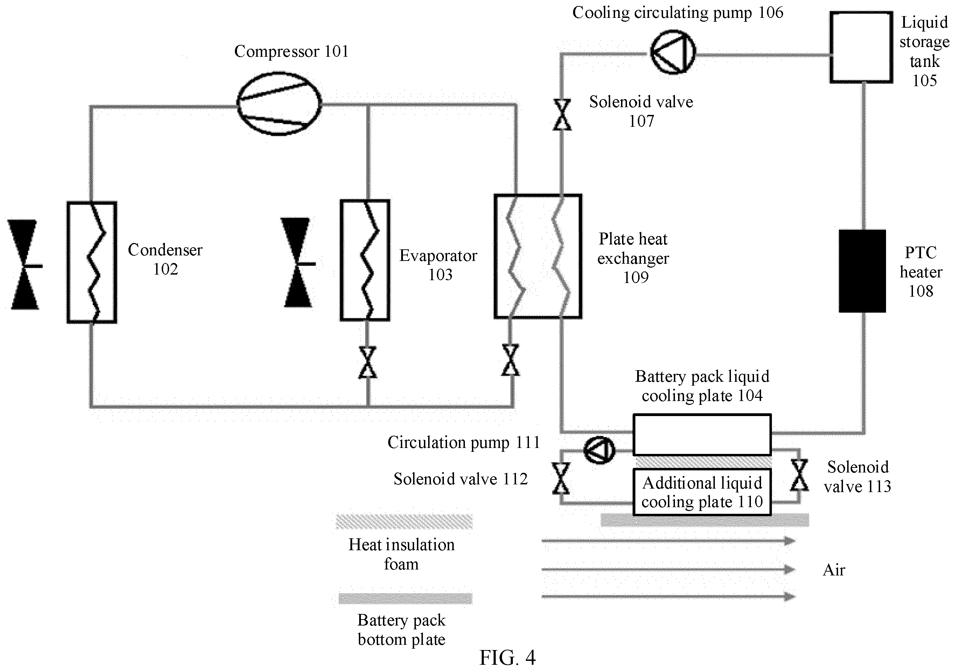

Based on a same inventive concept, an embodiment of this application provides a thermal management apparatus. The thermal management apparatus may be considered as a specific example of the thermal management apparatus 200. Referring to FIG. 4, the thermal management apparatus includes an air conditioning refrigeration loop, a heat dissipation and heating loop (which may be considered as a specific example of the second loop), and a newly added subloop (which may be considered as a specific example of the first loop).

The air conditioning refrigeration loop includes a compressor 101, a condenser 102, an evaporator 103, and a circulation pipeline that connects the compressor 101, the condenser 102, and the evaporator 103. The pipeline is filled with refrigerant, and the refrigerant is driven by a corresponding circulation pump. The heat dissipation and heating loop includes a battery pack liquid cooling plate 104 (which may be considered as a specific example of the first liquid cooling plate 202), a liquid storage tank 105, a cooling circulation pump 106 (which may be considered as a specific example of the second circulation pump), a solenoid valve 107 (which may be considered as a specific example of the third solenoid valve), a PTC heater 108, and a pipeline that connects the battery pack liquid cooling plate 104, the liquid storage tank 105, the cooling circulation pump 106, the solenoid valve 107, and the PTC heater 108. The battery pack liquid cooling plate 104 and the pipeline are filled with coolant, the cooling circulation pump 106 is configured to drive the coolant, and the solenoid valve 107 is configured to control communication or disconnection of the loop. Heat is exchanged between the air conditioning refrigeration loop and the heat dissipation and heating loop by using a plate heat exchanger 109.

For the heat dissipation and heating loop, refer to related descriptions of the heat dissipation and heating loop in FIG. 1. Details are not described herein again.

In addition, the newly added subloop can implement closing and opening of a thermal insulation passage. When there is a heat dissipation requirement, the thermal insulation passage is turned off, and another heat dissipation way (heat absorption performed by a battery pack frame and a vehicle chassis, and forced convection, for heat dissipation, of high-speed flowing air outside a battery pack) other than liquid-cooling heat dissipation is enabled. When there is a thermal insulation requirement, the thermal insulation passage is turned on. Specifically, the newly added subloop mainly includes the battery pack liquid cooling plate 104, an additional liquid cooling plate 110 (which may be considered as a specific example of the second liquid cooling plate 204), a circulation pump 111 (which may be considered as a specific example of the first circulation pump), a solenoid valve 112 (which may be considered as a specific example of the first solenoid valve 201), a solenoid valve 113 (which may be considered as a specific example of the second solenoid valve 203), and a coolant circulation pipeline.

The battery pack liquid cooling plate 104 and the additional liquid cooling plate 110 are disposed in parallel, and thermal insulation foam is filled between the two liquid cooling plates. To improve a thermal insulation effect, a material of the thermal insulation foam may be silica aerogel, and a thickness of the thermal insulation foam is usually about 10 mm. A thermally conductive adhesive is filled between the bottom of the additional liquid cooling plate 110 and a battery pack bottom plate. A thickness of the thermally conductive adhesive is usually 1.0 mm to 1.2 mm. The additional liquid cooling plate 110 presses the thermally conductive adhesive firmly by using a fixing force between the additional liquid cooling plate 110 and the battery pack frame, to reduce thermal conduction resistance. To reduce a weight of the battery pack and improve energy density of the battery pack, the additional liquid cooling plate 110 may be integrated with the battery pack bottom plate. After integration, the component serves as both the liquid cooling plate and the battery pack bottom plate, and the thermally conductive adhesive is not required in this case. The battery pack liquid cooling plate 104, the additional liquid cooling plate 110, the circulation pump 111, the solenoid valve 112, and the solenoid valve 113 are connected in series through a coolant pipeline. The coolant pipeline, the battery pack liquid cooling plate 104, and the additional liquid cooling plate 110 are filled with coolant, and a mixture of glycol and water may be selected for the coolant, where glycol accounts for 50% of a volume of the coolant, and water accounts for 50% of the volume of the coolant. The circulation pump 111 is configured to drive the coolant to circulate in the newly added subloop. The solenoid valve 112 and the solenoid valve 113 are configured to enable the two liquid cooling plates to communicate or disconnect as required: When there is a heat dissipation requirement, the battery pack liquid cooling plate 104 communicates with the additional liquid cooling plate 110; and when there is a thermal insulation requirement, the battery pack liquid cooling plate 104 and the additional liquid cooling plate 110 are disconnected.

When heat dissipation needs to be performed on a battery module, there may be two optional heat dissipation loops: 1. Heat from the battery module is transferred to the battery pack liquid cooling plate 104, the battery pack liquid cooling plate 104 transfers the heat to the circulating coolant in the heat dissipation and heating loop, the circulating coolant transfers the heat to the plate heat exchanger 109, and the plate heat exchanger 109 transfers the heat to the air conditioning cooling system, thereby implementing heat dissipation of the battery module. 2. When heat dissipation needs to be performed on the battery module, the solenoid valve 112 and the solenoid valve 113 are turned on, heat from the battery module is transferred to the battery pack liquid cooling plate 104, and afterwards, heat from an electronic device may be transferred to the battery pack bottom plate by using the coolant in the newly added subloop, thereby implementing heat dissipation. In specific implementation, one or both of the two heat dissipation loops may be selected as required.

When the battery module needs to be heated, a vehicle controller sends a request to start PTC heating. The PTC heater 108 heats the circulating coolant, the circulating coolant transfers heat to the battery pack liquid cooling plate 104, and the battery pack liquid cooling plate 104 finally transfers the heat to the battery module, thereby implementing heating of the battery module.

When thermal insulation needs to be performed on the battery module, the solenoid valve 112 and the solenoid valve 113 are turned off, so that the newly added subloop is cut off, and the newly added subloop cannot perform a heat dissipation function. The thermal insulation foam filled between the battery pack liquid cooling plate 104 and the additional liquid cooling plate 110 cuts off a heat transfer path from the bottom of the battery module to the battery pack frame. Therefore, heat from the battery module is difficult to be transferred out, and the heat is difficult to be absorbed by the battery pack bottom plate or the vehicle chassis, or carried away by air convection, thereby meeting a thermal insulation requirement.

It should be noted that the thermal management apparatus shown in FIG. 4 may be considered as a specific example of the thermal management apparatus 200. For implementations and technical effects of the thermal management apparatus shown in FIG. 4 that are not described in detail, refer to related descriptions of the thermal management apparatus 200. Details are not described herein again.

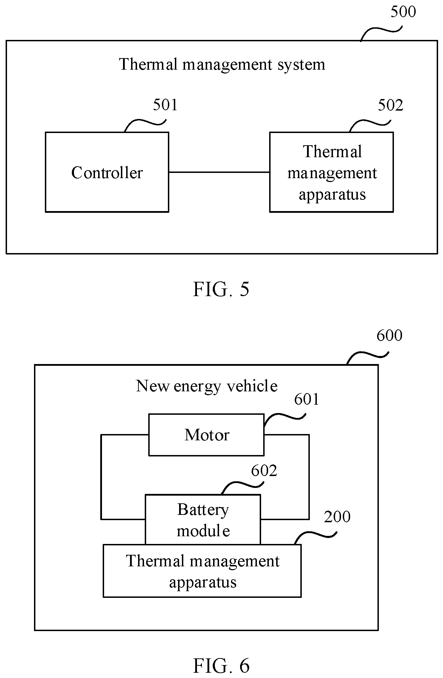

Based on a same technical concept, an embodiment of this application further provides a thermal management system. As shown in FIG. 5, the thermal management system 500 includes a controller 501 and a thermal management apparatus 502. For a specific implementation of the thermal management apparatus 502, refer to related descriptions of the thermal management apparatus 200. The thermal management apparatus 502 may be configured to perform thermal management on a battery module.

Specifically, the controller 501 is configured to: detect a temperature of the battery module; when detecting that the temperature of the battery module is lower than a first preset temperature, control a first solenoid valve and a second solenoid valve to be turned on and control a first circulation pump to be turned off; and control a third solenoid valve to be turned off and control a second circulation pump to be turned off.

The first preset temperature may be set as required. For example, it may be set to 35°C.

When the temperature of the battery module is not excessively high, the battery module does not have a high heat dissipation requirement. In this case, the third solenoid valve may be controlled to be turned off, and the second circulation pump may be controlled to be turned off, to cut off a second loop; and the first solenoid valve and the second solenoid valve are controlled to be turned on, and the first circulation pump is controlled to be turned off. In this case, static coolant in a first loop can transfer heat from the battery module to a battery pack bottom plate, and heat dissipation is performed on the battery module by using external airflow.

In addition to the foregoing heat dissipation scenario, the controller may perform heat dissipation to different degrees by using different settings such as a solenoid valve and a circulation pump in many scenarios. Three of these manners are listed in the following.

### Manner 1

The controller 501 is further configured to: when detecting that the temperature of the battery module is higher than the first preset temperature and lower than a second preset temperature (for example, the temperature of the battery module is higher than 35°C and lower than 45°C), control the first solenoid valve and the second solenoid valve to be turned on and control the first circulation pump to be turned on; and control the third solenoid valve to be turned off and control the second circulation pump to be turned off.

In Manner 1, the battery module has a heat dissipation requirement higher than that in the foregoing scenario (the temperature of the battery module is higher). In this case, the third solenoid valve may be controlled to be turned off, and the second circulation pump may be controlled to be turned off, to cut off the second loop; and the first solenoid valve and the second solenoid valve are controlled to be turned on, and the first circulation pump is controlled to be turned on. In this case, the circulating coolant in the first loop may transfer heat from the battery module to the battery pack bottom plate, and heat dissipation is performed on the battery module by using the external airflow. Driven by the first circulation pump, the coolant in the first loop may circulate. Therefore, compared with a heat dissipation effect in the foregoing scenario, a heat dissipation effect in Manner 1 is better.

### Manner 2

The controller 501 is further configured to: when detecting that the temperature of the battery module is higher than the second preset temperature and lower than a third preset temperature (for example, the temperature of the battery module is higher than 45°C and lower than 50°C), control the first solenoid valve and the second solenoid valve to be turned on and control the first circulation pump to be turned off; and control the third solenoid valve to be turned on and control the second circulation pump to be turned on.

When the temperature of the battery module is comparatively high, the battery module has a higher heat dissipation requirement. In this case, the first solenoid valve, the second solenoid valve, and the third solenoid valve may be controlled to be turned on, the second circulation pump may be controlled to be turned on, and the first circulation pump may be controlled to be turned off. Then, driven by the second circulation pump, the coolant in the first loop and the second loop circulates. One part of heat from the battery module is transferred to a cooling system by using the circulating coolant in the second loop, and the other part of the heat from the battery module is transferred to the battery pack bottom plate by using the circulating coolant in the first loop and then carried away by the external airflow. Both the first loop and the second loop perform a heat dissipation function.

In Manner 2, because shaft power of the first circulation pump is large enough, the first loop and the second loop can be driven by turning on only the first circulation pump, to achieve an expected heat dissipation effect.

### Manner 3

The controller 501 is further configured to: when detecting that the temperature of the battery module is higher than the third preset temperature (for example, the temperature of the battery module is higher than 50°C), control the first solenoid valve and the second solenoid valve to be turned on and control the first circulation pump to be turned on; and control the third solenoid valve to be turned on and control the second circulation pump to be turned on.

When the temperature of the battery module is comparatively high, the battery module has a higher heat dissipation requirement. In this case, the first solenoid valve, the second solenoid valve, and the third solenoid valve may be controlled to be turned on, and the first circulation pump and the second circulation pump may be controlled to be turned on. Then, driven by the first circulation pump and the second circulation pump, the coolant in the first loop and the coolant in the second loop circulate. One part of heat from the battery module is transferred to the cooling system by using the circulating coolant in the second loop, and the other part of the heat from the battery module is transferred to the battery pack bottom plate by using the circulating coolant in the first loop and then carried away by the external airflow. Both the first loop and the second loop perform a heat dissipation function.

In Manner 3, because shaft power of the first circulation pump and the second circulation pump is comparatively small, and the temperature of the battery module is comparatively high, the two circulation pumps may be turned on to drive the first loop and the second loop, to achieve an expected heat dissipation effect.

Optionally, the controller 501 is further configured to: control the first solenoid valve, the second solenoid valve, and the third solenoid valve to be turned on, and control the first circulation pump and the second circulation pump to be turned on.

For example, when the battery module is in a fast charging state, the first solenoid valve, the second solenoid valve, and the third solenoid valve may be controlled to be turned on, and the first circulation pump and the second circulation pump are controlled to be turned on, so that heat dissipation is performed on the battery module by using both the cooling system and the external airflow.

When the battery module is in the fast charging state, the temperature of the battery module is comparatively high, and heat dissipation needs to be performed on the battery module. In this case, the first solenoid valve, the second solenoid valve, and the third solenoid valve are controlled to be turned on, and the first circulation pump and the second circulation pump are controlled to be turned on. Both the first loop and the second loop are filled with the circulating coolant. Heat transferred from the battery module to the second loop is carried away by the cooling system, heat transferred from the battery module to the first loop is carried away on the battery pack bottom plate by the external airflow, and both loops can perform a heat dissipation function for the battery module. Therefore, the temperature of the battery module is greatly reduced in the fast charging state.

In addition, if a fast charging station is provided with air-cooled facilities, the air-cooled facilities may further be disposed under the battery pack bottom plate, and the air-cooled facilities may carry away, by using forced convection, the heat transferred to the battery pack bottom plate through the first loop. In other words, if the air-cooled facilities are disposed under the battery pack bottom plate, air convection on the battery pack bottom plate is stronger; and after the heat transferred from the battery module to the first loop reaches the battery pack bottom plate, the heat can be carried away by forced convection more quickly, thereby achieving a better heat dissipation effect.

Optionally, the controller 501 is further configured to: control the first solenoid valve and the second solenoid valve to be turned off and control the first circulation pump to be turned off; and control the third solenoid valve to be turned off, and control the second circulation pump to be turned off.

For example, when thermal insulation needs to be performed on the battery module, the first solenoid valve, the second solenoid valve, and the third solenoid valve are controlled to be turned off, and the first circulation pump and the second circulation pump are controlled to be turned off, so that a first liquid cooling plate and a second liquid cooling plate are disconnected. A thermal insulation structure filled between the first liquid cooling plate and the second liquid cooling plate may isolate the battery module from the outside to perform a thermal insulation function. Thermal insulation is performed on the battery module by using the thermal insulation structure.

Based on a same technical concept, when controlling the thermal management apparatus shown in FIG. 4, the controller may use different control policies in three scenarios: a fast charging scenario, a working condition during driving, and a working condition during thermal insulation.
1. Fast charging scenario
   (1) When a charging station is provided with air-cooled facilities, the controller controls the cooling circulation pump 106 and the circulation pump 111 to be turned on, and the solenoid valve 107, the solenoid valve 112, and the solenoid valve 113 to be turned on, and the air-cooled facilities are disposed at the bottom of the battery pack. A part of heat generated by a battery is carried away by the coolant. The other part of the heat is conducted by the battery pack liquid cooling plate to the additional liquid cooling plate, and then conducted from the additional liquid cooling plate to the battery pack bottom plate and the vehicle chassis, where a part of the heat is absorbed and stored by the battery pack bottom plate and the vehicle chassis, and a part of the heat is carried away by forced convection from the air-cooled facilities of the charging station.
   (2) When there are no air-cooled facilities at the charging station and an external ambient temperature is comparatively low, the controller controls the cooling circulation pump 106 and the circulation pump 111 to be turned on, and the solenoid valve 107, the solenoid valve 112, and the solenoid valve 113 to be turned on. A part of the heat generated by the battery is carried away by the coolant; and the other part of the heat is absorbed and stored by the battery pack bottom plate and the vehicle chassis, and carried away by natural air convection. Because the ambient temperature is comparatively low, a liquid inlet temperature of the liquid cooling plates may be increased, to reduce energy consumption.
2. Working condition during vehicle driving
   (1) When a cell temperature is lower than 35°C, the controller controls the cooling circulation pump 106 and the circulation pump 111 to be turned off, the solenoid valve 107 to be turned off, and the solenoid valve 112 and the solenoid valve 113 to be turned on. Heat generated by the battery module is first transferred to the battery pack liquid cooling plate 104. The battery pack liquid cooling plate 104 heats the coolant in the newly added subloop and then heats the additional liquid cooling plate 110. The additional liquid cooling plate 110 then transfers the heat to the battery pack bottom plate and the vehicle chassis. A part of the heat transferred to the battery pack bottom plate and the vehicle chassis is absorbed and stored by the battery pack bottom plate and the vehicle chassis, and the other part of the heat is carried away by forced convection of high-speed flowing air outside the battery pack, to ensure that all cells in the battery pack are in a uniform temperature state.
   (2) When a cell temperature is higher than or equal to 38°C and lower than 45°C, the controller controls the cooling circulation pump 106 to be turned off, and the solenoid valve 107 to be turned off, and controls the circulation pump 111 to be turned on, and the solenoid valve 112 and the solenoid valve 113 to be turned on. The coolant in the newly added subloop circulates, the circulating coolant may transfer heat from the battery module to the additional liquid cooling plate 110, and then the additional liquid cooling plate 110 transfers the heat to the battery pack bottom plate and the vehicle chassis. Apart of the heat transferred to the battery pack bottom plate and the vehicle chassis is absorbed and stored by the battery pack bottom plate and the vehicle chassis, and the other part of the heat is carried away by forced convection of high-speed flowing air outside the battery pack.
   (3) When a cell temperature is higher than or equal to 45°C, the controller controls the circulation pump 111 to be turned off, the cooling circulation pump 106 to be turned on, and the solenoid valve 107, the solenoid valve 112, and the solenoid valve 113 to be turned on. In this working condition, the heat dissipation and heating loop and the newly added subloop are combined into a new liquid cooling loop, thereby enhancing a heat dissipation capability of the thermal management apparatus. Apart of heat from the battery module is transferred to the battery pack liquid cooling plate 104, and then carried to the plate heat exchanger 109 by the circulating coolant on the battery pack liquid cooling plate 104; and the heat on the plate heat exchanger 109 is then carried away by an air conditioning system of a vehicle. The other part of the heat from the battery is first transferred to the battery pack liquid cooling plate 104, and then transferred to the additional liquid cooling plate 110 by the circulating coolant; and then the additional liquid cooling plate 110 transfers the heat to the battery pack bottom plate and the vehicle chassis. A part of the heat transferred to the battery pack bottom plate and the vehicle chassis is absorbed and stored by the battery pack bottom plate and the vehicle chassis, and the other part of the heat is carried away by forced convection of high-speed flowing air outside the battery pack.
3. Working condition during thermal insulation

When thermal insulation is required, the controller controls the cooling circulation pump 106 and the circulation pump 111 to be turned off, and the solenoid valve 107, the solenoid valve 112, and the solenoid valve 113 to be turned off. In this case, the battery pack liquid cooling plate 104 is made completely disconnected from the additional liquid cooling plate 110. Therefore, heat is difficult to be transferred from the battery pack liquid cooling plate 104 to the additional liquid cooling plate 110, and no heat is transferred from the additional liquid cooling plate 110 to the battery pack bottom plate and the vehicle chassis, not to mention that heat is absorbed by the battery pack bottom plate and the vehicle chassis, and carried away by natural convection of air outside the battery pack, thereby cutting off a heat dissipation path of the battery module. In addition, the thermal insulation foam is filled between the battery pack liquid cooling plate 104 and the additional liquid cooling plate 110, and the thermal insulation foam cuts off a heat dissipation path between the battery module and air inside the battery pack, thereby implementing a thermal insulation function.

Based on a same technical concept, an embodiment of this application provides a new energy vehicle. Referring to FIG. 6, the new energy vehicle 600 includes a motor 601, a battery module 602, and the foregoing thermal management apparatus 200. The battery module 602 is configured to provide power for the motor 601, and the thermal management apparatus 200 is configured to perform thermal management on the battery module 602.

## Claims

1. A thermal management apparatus (200), wherein the thermal management apparatus (200) is configured to perform thermal management on an electronic device, and the thermal management apparatus (200) comprises a first loop in which a first solenoid valve (201), a first liquid cooling plate (202), a second solenoid valve (203), and a second liquid cooling plate (204) are sequentially connected in series, and a thermal insulation structure (205); and
the second liquid cooling plate (204), the thermal insulation structure (205), and the first liquid cooling plate (202) are sequentially stacked; the first liquid cooling plate (202) is capable of performing heat transfer with the electronic device; when the first solenoid valve (201) and the second solenoid valve (203) are turned on, the first liquid cooling plate (202) communicates with the second liquid cooling plate (204) and heat from the electronic device is conducted to the first liquid cooling plate (202) and further conducted to the second liquid cooling plate (204) through the first loop and the heat is carried away on the second cooling plate (204) by external airflow; when the first solenoid valve (201) and the second solenoid valve (203) are turned off, the first liquid cooling plate (202) and the second liquid cooling plate (204) are disconnected.

2. The thermal management apparatus (200) according to claim 1, further comprising:
a first circulation pump connected in series in the first loop, wherein the first circulation pump is configured to drive coolant to circulate in the first loop.

3. The thermal management apparatus (200) according to claim 1 or 2, wherein the first liquid cooling plate (202) and the second liquid cooling plate (204) are disposed in parallel.

4. The thermal management apparatus (200) according to any one of claims 1 to 3, further comprising:
a second loop, wherein the second loop comprises the first liquid cooling plate (202), a second circulation pump, and a third solenoid valve that are connected in series; the second circulation pump is configured to drive the coolant to circulate in the second loop; and the third solenoid valve is configured to implement communication or disconnection of the second loop.

5. The thermal management apparatus (200) according to claim 4, further comprising:
a heat exchanger connected in series in the second loop, wherein the heat exchanger is configured to exchange heat with a cooling system.

6. The thermal management apparatus (200) according to any one of claims 1 to 5, wherein the electronic device is a battery module.

7. A thermal management system (500), comprising a controller (501) and the thermal management apparatus (200) according to any one of claims 1 to 6, wherein the controller (501) is configured to:
detect a temperature of a battery module; and
when detecting that the temperature of the battery module is lower than a first preset temperature, control a first solenoid valve (201) and a second solenoid valve (203) to be turned on and control a first circulation pump to be turned off; and control a third solenoid valve to be turned off and control a second circulation pump to be turned off.

8. The thermal management system (500) according to claim 7, wherein the controller (501) is further configured to:
when detecting that the temperature of the battery module is higher than the first preset temperature and lower than a second preset temperature, control the first solenoid valve (201) and the second solenoid valve (203) to be turned on and control the first circulation pump to be turned on; and control the third solenoid valve to be turned off and control the second circulation pump to be turned off.

9. The thermal management system (500) according to claim 7 or 8, wherein the controller (501) is further configured to:
when detecting that the temperature of the battery module is higher than the second preset temperature and lower than a third preset temperature, control the first solenoid valve (201) and the second solenoid valve (203) to be turned on and control the first circulation pump to be turned off; and control the third solenoid valve to be turned on and control the second circulation pump to be turned on.

10. The thermal management system (500) according to claim 7 or 8, wherein the controller (501) is further configured to:
when detecting that the temperature of the battery module is higher than a third preset temperature, control the first solenoid valve (201) and the second solenoid valve (203) to be turned on and control the first circulation pump to be turned on; and control the third solenoid valve to be turned on and control the second circulation pump to be turned on.

11. The thermal management system (500) according to any one of claims 7 to 10, wherein the controller is further configured to:
control the first solenoid valve (201), the second solenoid valve (203), and the third solenoid valve to be turned on, and control the first circulation pump and the second circulation pump to be turned on.

12. The thermal management system (500) according to any one of claims 7 to 11, wherein the controller (501) is further configured to:
control the first solenoid valve (201) and the second solenoid valve (203) to be turned off and control the first circulation pump to be turned off; and control the third solenoid valve to be turned off and control the second circulation pump to be turned off.

13. A new energy vehicle (600), comprising a motor (601), a battery module (602), and the thermal management apparatus (200) according to any one of claims 1 to 6, wherein the battery module (602) is configured to provide power for the motor (601), and the thermal management apparatus (200) is configured to perform thermal management on the battery module (602).

## Patentansprüche

1. Thermomanagementgerät (200), wobei das Thermomanagementgerät (200) dazu konfiguriert ist, Thermomanagement an einer elektronischen Vorrichtung durchzuführen, und wobei das Thermomanagementgerät (200) eine erste Schleife, in der ein erstes Magnetventil (201), eine erste Flüssigkeitskühlplatte (202), ein zweites Magnetventil (203) und eine zweite Flüssigkeitskühlplatte (204) nacheinander in Reihe geschaltet sind, und eine Thermoisolationsstruktur (205) umfasst; und
wobei die zweite Flüssigkeitskühlplatte (204), die Thermoisolationsstruktur (205) und die erste Flüssigkeitskühlplatte (202) nacheinander gestapelt sind; die erste Flüssigkeitskühlplatte (202) in der Lage ist, Wärmeübertragung mit der elektronischen Vorrichtung durchzuführen; wenn das erste Magnetventil (201) und das zweite Magnetventil (203) eingeschaltet sind, die erste Flüssigkeitskühlplatte (202) mit der zweiten Flüssigkeitskühlplatte (204) kommuniziert und Wärme von der elektronischen Vorrichtung durch die erste Schleife zu der ersten Flüssigkeitskühlplatte (202) geleitet wird und weiter zu der zweiten Flüssigkeitskühlplatte (204) geleitet wird und die Wärme auf der zweiten Kühlplatte (204) durch einen externen Luftstrom abgeführt wird; wenn das erste Magnetventil (201) und das zweite Magnetventil (203) ausgeschaltet sind, die erste Flüssigkeitskühlplatte (202) und die zweite Flüssigkeitskühlplatte (204) getrennt sind.

2. Thermomanagementgerät (200) nach Anspruch 1, ferner umfassend:
eine erste Zirkulationspumpe, die in der ersten Schleife in Reihe geschaltet ist, wobei die erste Zirkulationspumpe dazu konfiguriert ist, Kühlmittel zum Zirkulieren in der ersten Schleife anzutreiben.

3. Thermomanagementgerät (200) nach Anspruch 1 oder 2, wobei die erste Flüssigkeitskühlplatte (202) und die zweite Flüssigkeitskühlplatte (204) parallel angeordnet sind.

4. Thermomanagementgerät (200) nach einem der Ansprüche 1 bis 3, ferner umfassend:
eine zweite Schleife, wobei die zweite Schleife die erste Flüssigkeitskühlplatte (202), eine zweite Zirkulationspumpe und ein drittes Magnetventil umfasst, die in Reihe geschaltet sind; wobei die zweite Zirkulationspumpe dazu konfiguriert ist, das Kühlmittel zum Zirkulieren in der zweiten Schleife anzutreiben; und wobei das dritte Magnetventil dazu konfiguriert ist, eine Verbindung oder Trennung der zweiten Schleife zu implementieren.

5. Thermomanagementgerät (200) nach Anspruch 4, ferner umfassend:
einen Wärmetauscher, der in der zweiten Schleife in Reihe geschaltet ist, wobei der Wärmetauscher dazu konfiguriert ist, Wärme mit einem Kühlsystem auszutauschen.

6. Thermomanagementgerät (200) nach einem der Ansprüche 1 bis 5, wobei die elektronische Vorrichtung ein Batteriemodul ist.

7. Thermomanagementsystem (500), das eine Steuerung (501) und das Thermomanagementgerät (200) nach einem der Ansprüche 1 bis 6 umfasst, wobei die Steuerung (501) zu Folgendem konfiguriert ist:
eine Temperatur eines Batteriemoduls zu erkennen; und
wenn erkannt wird, dass die Temperatur des Batteriemoduls niedriger als eine erste voreingestellte Temperatur ist, ein erstes Magnetventil (201) und ein zweites Magnetventil (203) so zu steuern, dass sie eingeschaltet werden, und eine erste Zirkulationspumpe so zu steuern, dass sie ausgeschaltet wird;
und ein drittes Magnetventil so zu steuern, dass es ausgeschaltet wird, und eine zweite Zirkulationspumpe so zu steuern, dass sie ausgeschaltet wird.

8. Thermomanagementsystem (500) nach Anspruch 7, wobei die Steuerung (501) ferner zu Folgendem konfiguriert ist:
wenn erkannt wird, dass die Temperatur des Batteriemoduls höher als die erste voreingestellte Temperatur und niedriger als eine zweite voreingestellte Temperatur ist, das erste Magnetventil (201) und das zweite Magnetventil (203) so zu steuern, dass sie eingeschaltet werden, und die erste Zirkulationspumpe so zu steuern, dass sie eingeschaltet wird;
und das dritte Magnetventil so zu steuern, dass es ausgeschaltet wird, und die zweite Zirkulationspumpe so zu steuern, dass sie ausgeschaltet wird.

9. Thermomanagementsystem (500) nach Anspruch 7 oder 8, wobei die Steuerung (501) ferner zu Folgendem konfiguriert ist:
wenn erkannt wird, dass die Temperatur des Batteriemoduls höher als die zweite voreingestellte Temperatur und niedriger als eine dritte voreingestellte Temperatur ist, das erste Magnetventil (201) und das zweite Magnetventil (203) so zu steuern, dass sie eingeschaltet werden, und die erste Zirkulationspumpe so zu steuern, dass sie ausgeschaltet wird;
und das dritte Magnetventil so zu steuern, dass es eingeschaltet wird, und die zweite Zirkulationspumpe so zu steuern, dass sie eingeschaltet wird.

10. Thermomanagementsystem (500) nach Anspruch 7 oder 8, wobei die Steuerung (501) ferner zu Folgendem konfiguriert ist:
wenn erkannt wird, dass die Temperatur des Batteriemoduls höher als eine dritte voreingestellte Temperatur ist, das erste Magnetventil (201) und das zweite Magnetventils (203) so zu steuern, dass sie eingeschaltet werden, und die erste Zirkulationspumpe so zu steuern, dass sie eingeschaltet wird;
und das dritte Magnetventil so zu steuern, dass es eingeschaltet wird, und die zweite Zirkulationspumpe so zu steuern, dass sie eingeschaltet wird.

11. Thermomanagementsystem (500) nach einem der Ansprüche 7 bis 10, wobei die Steuerung ferner zu Folgendem konfiguriert ist:
das erste Magnetventil (201), das zweite Magnetventil (203) und das dritte Magnetventil so zu steuern, dass sie eingeschaltet werden, und die erste Zirkulationspumpe und die zweite Zirkulationspumpe so zu steuern, dass sie eingeschaltet werden.

12. Thermomanagementsystem (500) nach einem der Ansprüche 7 bis 11, wobei die Steuerung (501) ferner zu Folgendem konfiguriert ist:
das erste Magnetventil (201) und das zweite Magnetventil (203) so zu steuern, dass sie ausgeschaltet werden, und die erste Zirkulationspumpe so zu steuern, dass sie ausgeschaltet wird;
und das dritte Magnetventil so zu steuern, dass es ausgeschaltet wird, und die zweite Zirkulationspumpe so zu steuern, dass sie ausgeschaltet wird.

13. New Energy Vehicle (600), das einen Motor (601), ein Batteriemodul (602) und das Thermomanagementgerät (200) nach einem der Ansprüche 1 bis 6 umfasst, wobei das Batteriemodul (602) dazu konfiguriert ist, Leistung für den Motor (601) bereitzustellen, und wobei das Thermomanagementgerät (200) dazu konfiguriert ist, Thermomanagement für das Batteriemodul (602) durchzuführen.

## Revendications

1. Appareil de gestion thermique (200), dans lequel l'appareil de gestion thermique (200) est configuré pour effectuer une gestion thermique sur un dispositif électronique, et l'appareil de gestion thermique (200) comprend une première boucle dans laquelle une première électrovanne (201), une première plaque de refroidissement de liquide (202), une deuxième électrovanne (203) et une seconde plaque de refroidissement de liquide (204) sont connectées séquentiellement en série, et une structure d'isolation thermique (205) ; et
la seconde plaque de refroidissement de liquide (204), la structure d'isolation thermique (205) et la première plaque de refroidissement de liquide (202) sont empilées séquentiellement ; la première plaque de refroidissement de liquide (202) est capable d'effectuer un transfert de chaleur avec le dispositif électronique ; lorsque la première électrovanne (201) et la deuxième électrovanne (203) sont activées, la première plaque de refroidissement de liquide (202) communique avec la seconde plaque de refroidissement de liquide (204) et la chaleur du dispositif électronique est conduite vers la première plaque de refroidissement de liquide (202) et est ensuite conduite vers la seconde plaque de refroidissement de liquide (204) à travers la première boucle et la chaleur est évacuée sur la seconde plaque de refroidissement (204) par un flux d'air externe ; lorsque la première électrovanne (201) et la deuxième électrovanne (203) sont désactivées, la première plaque de refroidissement de liquide (202) et la seconde plaque de refroidissement de liquide (204) sont déconnectées.

2. Appareil de gestion thermique (200) selon la revendication 1, comprenant en outre :
une première pompe de circulation connectée en série dans la première boucle, dans lequel la première pompe de circulation est configurée pour amener le liquide de refroidissement à circuler dans la première boucle.

3. Appareil de gestion thermique (200) selon la revendication 1 ou 2, dans lequel la première plaque de refroidissement de liquide (202) et la seconde plaque de refroidissement de liquide (204) sont disposées en parallèle.

4. Appareil de gestion thermique (200) selon l'une quelconque des revendications 1 à 3, comprenant en outre :
une seconde boucle, dans lequel la seconde boucle comprend la première plaque de refroidissement de liquide (202), une seconde pompe de circulation et une troisième électrovanne qui sont connectées en série ; la seconde pompe de circulation est configurée pour amener le liquide de refroidissement à circuler dans la seconde boucle ; et la troisième électrovanne est configurée pour mettre en œuvre une communication ou une déconnexion de la seconde boucle.

5. Appareil de gestion thermique (200) selon la revendication 4, comprenant en outre :
un échangeur de chaleur connecté en série dans la seconde boucle, dans lequel l'échangeur de chaleur est configuré pour échanger de la chaleur avec un système de refroidissement.

6. Appareil de gestion thermique (200) selon l'une quelconque des revendications 1 à 5, dans lequel le dispositif électronique est un module de batterie.

7. Système de gestion thermique (500), comprenant un dispositif de commande (501) et l'appareil de gestion thermique (200) selon l'une quelconque des revendications 1 à 6, dans lequel le dispositif de commande (501) est configuré pour :
détecter une température d'un module de batterie ; et
lors de la détection du fait que la température du module de batterie est inférieure à une première température prédéfinie, commander l'activation d'une première électrovanne (201) et d'une deuxième électrovanne (203) et commander l'arrêt d'une première pompe de circulation ; et commander la désactivation d'une troisième électrovanne et commander l'arrêt d'une seconde pompe de circulation.

8. Système de gestion thermique (500) selon la revendication 7, dans lequel le dispositif de commande (501) est en outre configuré pour :
lors de la détection du fait que la température du module de batterie est supérieure à la première température prédéfinie et inférieure à une deuxième température prédéfinie, commander l'activation de la première électrovanne (201) et de la deuxième électrovanne (203) et commander la mise en marche de la première pompe de circulation ; et commander la désactivation de la troisième électrovanne et commander l'arrêt de la seconde pompe de circulation.

9. Système de gestion thermique (500) selon la revendication 7 ou 8, dans lequel le dispositif de commande (501) est en outre configuré pour :
lors de la détection du fait que la température du module de batterie est supérieure à la deuxième température prédéfinie et inférieure à une troisième température prédéfinie, commander l'activation de la première électrovanne (201) et de la deuxième électrovanne (203) et commander l'arrêt de la première pompe de circulation ; et commander l'activation de la troisième électrovanne et commander la mise en marche de la seconde pompe de circulation.

10. Système de gestion thermique (500) selon la revendication 7 ou 8, dans lequel le dispositif de commande (501) est en outre configuré pour :
lors de la détection du fait que la température du module de batterie est supérieure à une troisième température prédéfinie, commander l'activation de la première électrovanne (201) et de la deuxième électrovanne (203) et commander la mise en marche de la première pompe de circulation ; et
commander l'activation de la troisième électrovanne et commander la mise en marche de la seconde pompe de circulation.

11. Système de gestion thermique (500) selon l'une quelconque des revendications 7 à 10, dans lequel le dispositif de commande est en outre configuré pour :
commander l'activation de la première électrovanne (201), de la deuxième électrovanne (203) et de la troisième électrovanne, et commander la mise en marche de la première pompe de circulation et de la seconde pompe de circulation.

12. Système de gestion thermique (500) selon l'une quelconque des revendications 7 à 11, dans lequel le dispositif de commande (501) est en outre configuré pour :
commander la désactivation de la première électrovanne (201) et de la deuxième électrovanne (203) et commander l'arrêt de la première pompe de circulation ; et commander la désactivation de la troisième électrovanne et commander l'arrêt de la seconde pompe de circulation.

13. Véhicule à énergies nouvelles (600), comprenant un moteur (601), un module de batterie (602) et l'appareil de gestion thermique (200) selon l'une quelconque des revendications 1 à 6, dans lequel le module de batterie (602) est configuré pour fournir de l'énergie au moteur (601), et l'appareil de gestion thermique (200) est configuré pour effectuer une gestion thermique sur le module de batterie (602) .
